(19) **Europäisches Patentamt**

**European Patent Office**

**Office européen des brevets**

(11) Veröffentlichungsnummer: **0 144 634**
**B1**

(12) **EUROPÄISCHE PATENTSCHRIFT**

(45) Veröffentlichungstag der Patentschrift:
**07.01.88**

(21) Anmeldenummer: **84112361.5**

(22) Anmeldetag: **13.10.84**

(51) Int. Cl.⁴: **A 01 C 5/06**

㊹ Särvorrichtung für eine Sämaschine.

(30) Priorität: **28.10.83 US 546690**

(43) Veröffentlichungstag der Anmeldung:
**19.06.85 Patentblatt 85/25**

(45) Bekanntmachung des Hinweises auf die Patenterteilung:
**07.01.88 Patentblatt 88/1**

(84) Benannte Vertragsstaaten:
**DE FR GB**

(56) Entgegenhaltungen:
**DE - B - 2 830 195**
**US - A - 1 165 735**
**US - A - 4 404 918**

(73) Patentinhaber: **DEERE & COMPANY, 1 John Deere Road,**
**Moline Illinois 61265 (US)**

(72) Erfinder: **Clark, Richard Hugo, 614 Terrace Dr., Blue**
**Grass Iowa 52726 (US)**

(74) Vertreter: **Feldmann, Bernhard et al, DEERE &**
**COMPANY European Office, Patent Department**
**Steubenstrasse 36-42 Postfach 503,**
**D-6800 Mannheim 1 (DE)**

ACTORUM AG

## Beschreibung

Die Erfindung bezieht sich auf eine Sävorrichtung für eine Sämaschine, die an einem Rahmen der Sämaschine angeordnet ist und einen Tragarm zur Aufnahme einer Zudeckeinrichtung mit zwei auf einer Achse V-förmig zueinander drehbar gelagerten Scheibenschalen, deren Abstand seitlich veränderbar ist, aufweist, wobei die Achse aus einem Mittelstück mit zwei sich daran anschliessenden Achsteilen besteht, die endseitig je einen ersten einen kleineren Durchmesser als der Durchmesser des Mittelstückes der Achse aufweisenden Reduzierteil zur Aufnahme einer ersten Distanzbuchse aufweisen, die einerseits gegen eine erste auf der Achse vorgesehene Schulter, andererseits mittel- oder unmittelbar gegen das entsprechende Scheibenschar zur Anlage bringbar ist.

Es ist bereits eine Sävorrichtung bekannt (US-A-4404918), die eine Zudeckvorrichtung mit zwei auf einer Achse V-förmig angeordneten Scheibenscharen aufweist, die hierzu auf einzeln verstellbar angeordneten Achsen drehbar gelagert sind. Die Achsen sind hierzu in Buchsen aufgenommen, die eine geneigt verlaufende Bohrung aufweisen, so dass durch Drehen der Buchse die Neigung der Achse und somit die Stellung des entsprechenden Scheibenschares verändert wird. Durch die Veränderung der Stellung bzw. der Neigung des Scheibenschares wird zwar der Abstand der in den Boden eingreifenden Teile der Scheibenschare untereinander verändert, jedoch auch gleichzeitig der zwischen den beiden Scheibenscharen gebildete Winkel, so dass die einzelnen Saatrillen unterschiedlich stark zugedeckt werden, da der Anstellwinkel der Scheibenschare mit Bezug auf die gezogene Furche unterschiedlich stark ist.

Es ist bereits eine Sämaschine mit einer Sävorrichtung der eingangs aufgeführten Art bekannt (DE-A-2830195), die an einem Rahmen der Sämaschine angeordnet ist und einen Tragarm zur Aufnahme einer Zudeckvorrichtung mit zwei auf einer Achse V-förmig zueinander drehbar gelagerten Scheibenscharen aufweist. Der Abstand zwischen den einzelnen Scheibenscharen lässt sich durch Aufschieben von Distanzbuchsen auf das äussere Ende der Achse verändern. Bei Scheibenscharen, die wesentlich aufwendiger gelagert und auch mit Dichtungselementen ausgestattet sind, lässt sich durch die blosse Verwendung von Distanzstücken nicht die gewünschte Festlegung der Scheibenschare an bestimmten Stellen der Achsen vornehmen, da die bekannten Buchsen lediglich dazu geeignet sind, gegen einen Aussenteil des Scheibenschares zur Anlage gebracht zu werden.

Demgegenüber liegt der Erfindung die Aufgabe zugrunde, den Abstand der einzelnen Scheibenschare untereinander derart zu verändern, ohne dabei die Neigung der Scheibenschare zu beeinflussen, auch dann, wenn diese mit Wälzlagern und Dichtungselementen ausgestattet sind. Diese Aufgabe ist dadurch gelöst worden, dass sich an den ersten Reduzierteil zur Aufnahme eines Wälzlagers ein zweiter einen etwas grösseren Durchmesser aufweisender Reduzierteil zur Aufnahme eines Dichtungselementes anschliesst, dessen in Richtung des freien Endes der Achse zeigende Ringfläche die zwischen dem ersten und zweiten Reduzierteil liegende erste Schulter bildet, während eine zweite Schulter an der Übergangsstelle des Mittelstückes der Achse zu dem zweiten Reduzierteil gebildet ist. Die vorteilhafte Ausbildung des Endteiles der Achse bzw. die Verwendung von zwei Reduzierteilen gestattet auf einfache Weise in mindestens zwei Stellungen einmal die Anlage des Wälzlagers zur Aufnahme des Scheibenschares gegen die erste Schulter und die Anlage des Dichtungselementes zur Abdichtung des Wälzlagers gegen die zweite Schulter. Auf diese Weise erhält man eine sehr exakte Aufnahme des Scheibenschares. Eine Verstellung des Scheibenschares auf dem Endteil der Achse lässt sich durch Herausnahme der beiden Distanzstücke ohne weiteres erreichen. Somit ist eine stufenweise Verstellung eines Scheibenschares auch bei einem inneren etwas aufwendigeren Aufbau des Scheibenschares ohne weiteres möglich. Ausserdem lässt sich eine derart ausgebildete Achse ohne weiteres leicht herstellen, so dass neben einer einfachen Verstellmöglichkeit der Scheibenschare eine kostengünstige Vorrichtung geschaffen wird. Vorteilhaft ist es ferner, dass bei direkter Anlage des Wälzlagers gegen die erste Schulter die als Feststellelement ausgebildete Mutter über eine dritte Distanzbuchse gegen das Wälzlager zur Anlage bringbar ist und dass die einzelnen Distanzbuchsen gleich lang sind. Hierdurch lassen sich die Distanzbuchsen ohne weiteres beliebig auswechseln und einsetzen, und zwar einmal vor bzw. hinter der entsprechenden Stirnfläche bzw. Ringfläche der Scheibenschare. Da die Distanzbuchsen gleich lang sind und auch den gleichen Durchmesser aufweisen, lassen sich die Lagerhaltungskosten für die Distanzbuchsen weiterhin reduzieren.

Im folgenden wird die Erfindung anhand von lediglich einen Ausführungsweg darstellenden Zeichnungen näher erläutert. Es zeigt:

Fig. 1 eine perspektivische Darstellung einer Sävorrichtung,

Fig. 2 eine Achse mit einem Scheibenschar zum Andrücken der offenen Furchen,

Fig. 3 eine Schnittdarstellung des rechten Teils der Achse mit den entsprechenden Lagerelementen des Scheibenschares,

Fig. 4 eine Rückansicht der beiden an der Achse angeordneten Scheibenschare, wobei die unteren Enden der Scheibenschare einen Abstand x aufweisen,

Fig. 5 eine ähnliche Darstellung wie in Fig. 3, wobei die Scheibenschare in Richtung des Endes der Achse verstellt worden sind,

Fig. 6 eine Rückansicht der beiden Scheibenschare, wobei der Abstand y grösser ist als der Abstand x gemäss Fig. 4.

In der Zeichnung ist mit 10 eine Sävorrichtung bezeichnet, die einen Rahmen 11 aufweist, der über parallel verlaufende Lenker 12 an einen Hauptrahmen einer in der Zeichnung nicht dargestellten Sämaschine vertikal schwenkbar angeschlossen ist. Auf dem Rahmen 11 sind ein Sammelbehälter 13 für Saatgut und ein Sammelbehälter 14 für Düngemittel sowie ein Furchenöffner 15, Laufräder 16 und eine Furchenzudeckvorrichtung 17 angeschlossen.

Die Furchenzudeckvorrichtung 17 weist einen Tragarm 18 auf, der mit seinem oberen Ende an dem Rahmen 11 um eine horizontal verlaufende Achse 19 schwenkbar gelagert ist.

Zur Furchenzudeckvorrichtung gehören zwei Scheibenschare 21, die auf einer Achse 22 drehbar gelagert sind, die ein Mittelstück 23 aufweist, an das sich zwei V-förmig zueinander verlaufende Achsschenkel 24 anschliessen, die an ihren äusseren Enden einen Gewindeteil 25 zur Aufnahme je einer Mutter 26 aufweisen. Auf der einen Seite der Achse 22 befindet sich eine Nut 20, damit die rechte Seite der Achse von der linken Seite der Achse aus Fertigungsgründen besser unterschieden werden kann.

Ein jeder rechter und linker Achsschenkel 24 der Achse 22 weist einen einen geringeren Durchmesser aufweisenden Achsteil 27 auf, der zur Aufnahme von paarweise angeordneten Wälzlagern 28 dient, die zur Lagerung der Scheibenschare 21 dienen. Ein zweiter Achsteil 29 weist einen Durchmesser auf, der geringfügig grösser ist als der Durchmesser des Achsteiles 27 und der zur Aufnahme eines Dichtungselementes 30 dient, so dass verhindert wird, dass Schmutz in die Wälzlager 28 eindringen kann. Ein weiteres Dichtelement 31, das beispielsweise als Plastikkappe ausgebildet ist, sitzt über der Mutter 26 am Ende des Achsteiles 27 und verhindert, dass Schmutz von dieser Seite in die Wälzlager 28 eindringen kann.

Eine erste Schulter 32 teilt den Achsteil 27 von dem Achsteil 29 ab, wobei eine zweite Schulter 33 das andere Ende des zweiten Achsteiles 29 von dem Achsschenkel 24 abteilt. Eine Unterlagscheibe bzw. Distanzbuchse 34 kann zwischen der Mutter 26 und dem Wälzlager 28 auf das Ende des Achsteiles 27 aufgeschoben werden. Es wird darauf hingewiesen, dass der Tragarm 18 mit der Achse 22 verschweisst ist, obgleich eine Verbindung zwischen den beiden Teilen auch auf andere Weise möglich ist.

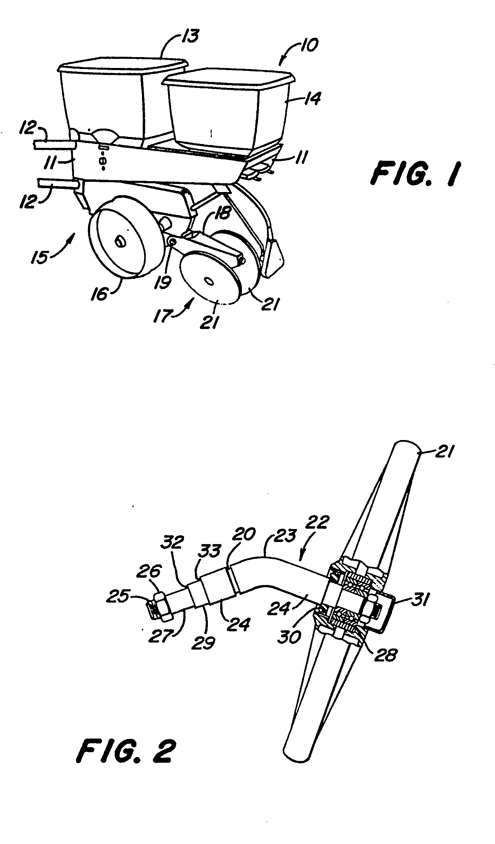

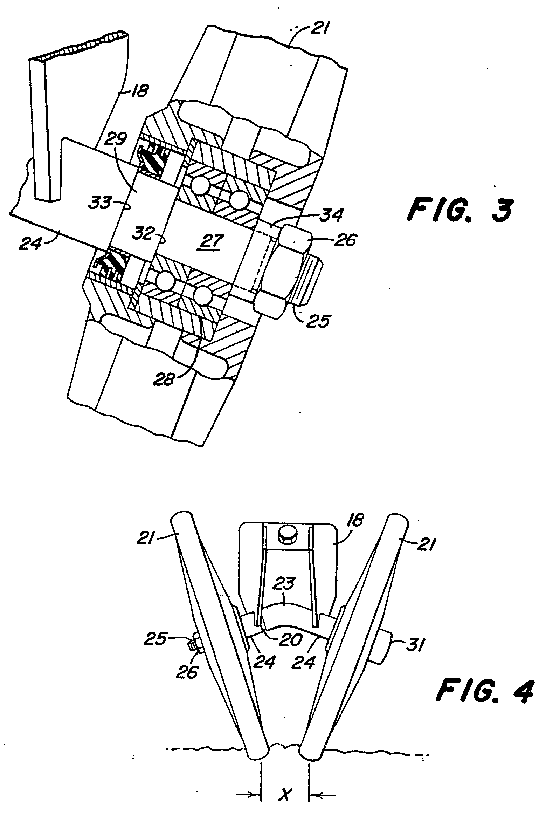

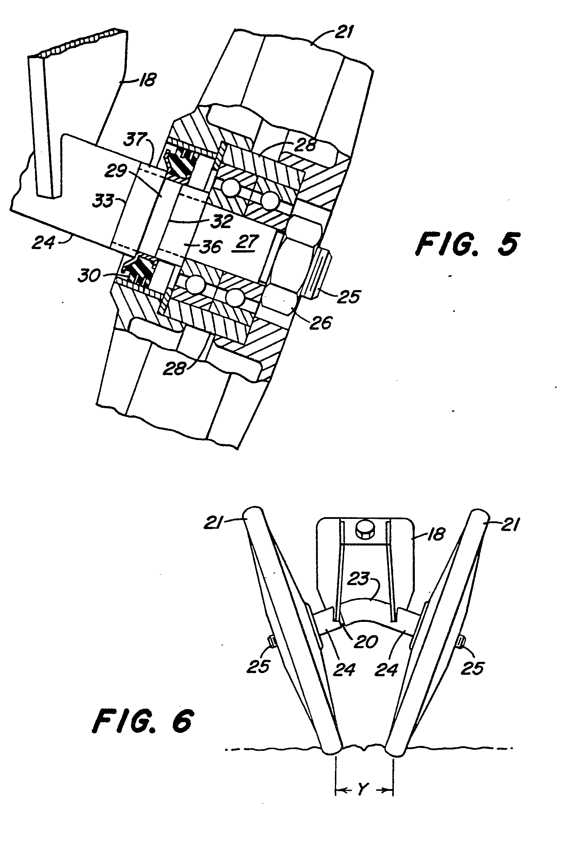

Mit Bezug auf Fig. 4 wird darauf hingewiesen, dass das Scheibenschar 21 auf der Achse 22 entsprechend der Darstellung in Fig. 2 und 3 befestigt ist, wobei die in den Boden eingreifenden Teile des Scheibenschares untereinander einen Abstand x bilden. Jedoch kann der einstellbare Abstand der Scheibenschare 21 auch einen Abstand y gemäss Fig. 6 aufweisen, wenn beispielsweise eine Distanzbuchse 36 und eine zweite Distanzbuchse 37 (siehe Fig. 5) auf die Achse 22 aufgeschoben werden. Die Distanzbuchse 36 hat einen Innendurchmesser, der in etwa dem Aussendurchmesser des Achsteiles 27 entspricht, wobei der Aussendurchmesser der Distanzbuchse 36 in etwa dem Aussendurchmesser des Achsteiles 29 entspricht.

Die zweite Distanzbuchse 37 hat einen Innendurchmesser, der in etwa dem Aussendurchmesser des Achsteiles 29 entspricht, so dass die Distanzbuchse 37 teleskopartig darauf angebracht werden kann. Die Distanzbuchse 37 weist einen äusseren Durchmesser auf, der in etwa dem Durchmesser des mittleren Teiles der Achse 22 entspricht. Sollten aus irgendeinem Grunde die Durchmesser der Distanzbuchsen 34, 36 und 37 anders gewählt werden, so ist das möglich. Auf jeden Fall sind die Abmessungen der Distanzbuchsen 34, 36 und 37 so gewählt, dass eine einwandfreie Anordnung und Lagerung des Dichtungselementes 30 sowie der übrigen Teile, beispielsweise der Wälzlager, auf der Achse 22 möglich ist.

Die Distanzbuchse 34 (siehe Fig. 3) weist in etwa die gleiche Länge auf wie die Distanzbuchsen 36 und 37, und diese kann ohne weiteres entfernt werden, wenn lediglich die Distanzbuchsen 36 und 37 verwendet werden sollen (siehe Fig. 5), so dass die Mutter 26 nach Entfernen der Distanzbuchse 34 gegen den Innenring des Wälzlagers 28 zur Anlage kommt.

Die Distanzbuchse 36 sowie die zweite Distanzbuchse 37 weisen eine derartige Länge auf, dass die Wälzlager 28 einen axialen Abstand zur Schulter 32 aufweisen, der in etwa dem Abstand zwischen der Stirnseite der Buchse 34 und der Schulter 33 entspricht. Die Abstände sind so gewählt, dass eine einwandfreie Aufbringung der Wälzlager in verschiedenen Positionen möglich ist. Sollten die einzelnen Abstände der Distanzbuchsen 34, 36 und 37 verändert werden, so müssen die Abstände so sein, dass die Längen der Distanzbuchsen 36 und 37 stets gleich sind, so dass bei Veränderung der Länge der Distanzbuchse 36 um einen entsprechenden Betrag die korrespondierende Distanzbuchse 37 um den gleichen Anteil verlängert werden muss. Nach dem Ausführungsbeispiel können die Scheibenschare 21 entweder mit oder ohne die beiden Distanzbuchsen 36 und 37 auf der Achse 22 montiert werden.

**Patentansprüche**

1. Sävorrichtung (10) für eine Sämaschine, die an einem Rahmen (11) der Sämaschine angeordnet ist und einen Tragarm (18) zur Aufnahme einer Zudeckeinrichtung (17) mit zwei auf einer Achse (22) V-förmig zueinander drehbar gelagerten Scheibenscharen (21), deren Abstand seitlich veränderbar ist, aufweist, wobei die Achse (22) aus einem Mittelstück (23) mit zwei sich daran anschliessenden Achsteilen (24) besteht, die endseitig je einen ersten, einen kleineren Durchmesser als der Durchmesser des Mittelstückes (23) der Achse (22) aufweisenden Reduzierteil (27) zur Aufnahme einer ersten Distanzbuchse (36) aufweisen, die einerseits gegen eine erste auf der Achse vorgesehene Schulter (32), andererseits mittel- oder unmittelbar gegen das entsprechende Scheibenschar (21) zur Anlage bringbar ist, dadurch gekennzeichnet, dass sich an den ersten Reduzierteil (27) zur Aufnahme eines Wälzlagers (28) ein zweiter, einen etwas grösseren Durchmesser aufweisender Reduzierteil (29) zur Aufnahme eines Dichtungselementes (30) anschliesst, dessen in Richtung des freien Endes der Achse (22) zeigende Ringfläche die zwischen dem ersten und zweiten Reduzierteil liegende erste Schulter (32) bildet, während eine zweite Schulter (33) an der Übergangsstelle des Mittelstückes (23) der Achse zu dem zweiten Reduzierteil (29) gebildet ist.

2. Sävorrichtung nach Anspruch 1, dadurch gekennzeichnet, dass das Dichtungselement einerseits über eine zweite ebenfalls auf dem Reduzierteil (27) angeordnete Distanzbuchse (37) gegen die zweite Schulter (33) und andererseits gegen das auf dem ersten Reduzierteil (27) vorgesehene Wälzlager (28) zur Anlage bringbar ist, das einerseits gegen die erste Distanzbuchse, andererseits gegen ein auf das freie Ende des Achsteiles aufschraubbares Feststellelement zur Anlage bringbar ist.

3. Sävorrichtung nach Anspruch 1 und 2, dadurch gekennzeichnet, dass bei direkter Anlage des Wälzlagers (28) gegen die erste Schulter (32) die als Feststellelement ausgebildete Mutter (26) über eine dritte Distanzbuchse (34) gegen das Wälzlager zur Anlage bringbar ist.

4. Sävorrichtung nach Anspruch 2, dadurch gekennzeichnet, dass die einzelnen Distanzbuchsen (34, 36, 37) gleich lang sind.

### Claims

1. A seeding device (10) for a seed drill, which is arranged on a frame (11) of the seed drill and which comprises a support arm (18) for carrying a covering means (17) with two disc arrays (21) which are mounted on a shaft (22) rotatably in a V-shape relative to each other and the spacing of which is laterally variable, wherein the shaft (22) comprises a central portion (23) with two shaft portions (24) which adjoin same and which at their ends each have a first reducing portion (27) which is of smaller diameter than the diameter of the central portion (23) of the shaft (22), for carrying a first spacer sleeve (36) which can be brought to bear on the one hand against a first shoulder (32) on the shaft and on the other hand directly or indirectly against the corresponding disc array (21) characterised in that disposed adjoining the first reducing portion (27) for carrying a rolling bearing (28) is a second reducing portion (29) which is of somewhat larger diameter, for carrying a sealing element (30), the annular surface thereof which faces in the direction of the free end of the shaft (22) forming the first shoulder which lies between the first and second reducing portions, while a second shoulder (33) is formed at the transition of the central portion (23) of the shaft to the second reducing portion (29).

2. A seeding device according to claim 1 characterised in that the sealing element can be caused to bear on the one hand by way of a second spacer sleeve (37) which is also arranged on the reducing portion (27), against the second shoulder (33), and on the other hand against the rolling bearing (28) which is disposed on the first reducing portion (27) and which can be brought to bear on the one hand against the first spacer sleeve and on the other hand against a locking element which can be screwed on to the free end of the shaft portion.

3. A seeding device according to claims 1 and 2 characterised in that, when the rolling bearing (28) bears directly against the first shoulder (32), the nut (26) which is in the form of the locking element can be brought to bear against the rolling bearing by way of a third spacer sleeve (34).

4. A seeding device according to claim 2 characterised in that the individual spacer sleeves (34, 36, 37) are of equal length.

### Revendications

1. Dispositif (10) pour semer d'un semoir, qui est placé sur un bâti (11) du semoir et comporte un bras de support (18) pour recevoir un recouvreur (17) comportant deux disques de soc (21) montés de façon à pouvoir tourner, en faisant un V entre eux, sur un axe (22), dont la distance est variable latéralement, l'axe (22) comprenant une section centrale (23) avec deux parties d'axe (24) qui s'y raccordent, qui comportent chacune en bout une première partie de réduction (27) présentant un diamètre inférieur au diamètre de la section centrale (23) de l'axe (22) pour recevoir une première douille d'écartement (36), qui peut être amenée d'une part au contact d'un premier épaulement (32) prévu sur l'axe, d'autre part directement ou indirectement au contact du disque (21) correspondant, caractérisé en ce qu'à la première partie de réduction (27), il se raccorde, pour recevoir un roulement (28), un second élément de réduction (29) présentant un diamètre un peu supérieur, propre à recevoir un élément d'étanchéité (30) dont la surface annulaire dirigée vers l'extrémité libre de l'axe (22) constitue le premier épaulement (32) situé entre la première partie de réduction et la seconde, tandis qu'un second épaulement (33) est formé dans la zone de raccordement de la section centrale (23) de l'axe avec la seconde partie de réduction (29).

2. Dispositif pour semer selon la revendication 1, caractérisé en ce que l'élément d'étanchéité peut être amené d'une part, par l'intermédiaire d'une seconde douille d'écartement (37) placée également sur la partie de réduction (27), au contact du second épaulement (33), et d'autre part, au contact du roulement (28) prévu sur la première partie de réduction (27), qui peut être amené en contact d'une part avec la première douille d'écartement, d'autre part avec un élément de blocage pouvant être vissé sur l'extrémité libre de la partie d'axe.

3. Dispositif pour semer selon les revendications 1 et 2, caractérisé en ce que, lorsque le roulement (28) est en contact direct avec le premier épaulement (32), l'écrou (26) constituant un élément de blocage peut être amené au contact du roulement par l'intermédiaire d'une troisième douille d'écartement (34).

4. Dispositif pour semer selon la revendication 2, caractérisé en ce que les différentes douilles d'écartement (34, 36, 37) sont de même longueur.

*FIG. 1*

*FIG. 2*

FIG. 3

FIG. 4

FIG. 5

FIG. 6